# EUROPÄISCHE PATENTSCHRIFT

(11) **EP 1 626 792 B1**
(45) Veröffentlichungstag und Bekanntmachung des Hinweises auf die Patenterteilung: **20.08.2008**
(21) Anmeldenummer: 04732583.2
(22) Anmeldetag: 13.05.2004
(51) Int. Cl.: B01D 29/62, B01D 35/12

(54) **VERFAHREN UND VORRICHTUNG ZUR REINIGUNG VON SCHMELZFILTERN**
METHOD AND DEVICE FOR CLEANING MELT FILTRATION SYSTEMS
PROCEDE ET DISPOSITIF DE NETTOYAGE DE FILTRES DE MASSES FONDUES

(30) Priorität: 23.05.2003 DE 10323268
(43) Veröffentlichungstag der Anmeldung: 22.02.2006
(73) Patentinhaber: Oerlikon Textile GmbH & Co. KG, 42897 Remscheid (DE)
(72) Erfinder: ALEXANDER, Jörg, 42897 Remscheid (DE)
(74) Vertreter: Kahlhöfer, Hermann
(86) Internationale Anmeldenummer: PCT/EP2004/005112
(87) Internationale Veröffentlichungsnummer: WO 2004/103522

(56) Entgegenhaltungen:
- EP-A- 0 791 386
- DE-A- 19 649 013
- US-A- 5 456 828

## Beschreibung

Die Erfindung betrifft ein Verfahren zum Reinigen von Filtern für schmelzflüssiges Polymer gemäß dem Oberbegriff des Anspruchs 1 sowie eine Vorrichtung zur Durchführung des Verfahrens.

In der Regel werden in Polymerschmelze verarbeitenden Anlagen wie beispielsweise Schmelzspinnanlagen Filter zum Reinigen der Polymerschmelze eingesetzt. Die Filter dienen dazu, eventuell in der Schmelze enthaltene Verunreinigungen herauszufiltern. Ferner erlauten es Filter, höherviskose Bestandteile in der Schmelze, die durch zeit- und temperaturbedingten Abbau der Polymerketten oder durch eine Nachpolymerisation oder aber durch Quervernetzung (Gele) entstehen, sowie akkumulierte Additive des Polymers wie z.B. Titandioxid *herauszufiltern*. Durch die Filterung wird eine Störung der nachfolgenden Prozessschritte verhindert und die Qualität des Endproduktes sichergestellt Dies ist im Falle des Schmelzspinnens insbesondere beim Spinnen feiner Filamente von großer Wichtigkeit.

Als Filtermaterialien kommen Flächengebilde wie feine Drahtgewebe oder Sinterfilter aus unregelmäßig angeordneten Drähten oder Metallpulver jeweils aus rostfreiem Stahl zum Einsatz, die im Wesentlichen senkrecht zu ihrer Flächenebene durchströmt werden und die aufgrund ihrer Porengröße größere Partikel am Passieren hindern.

Es liegt auf der Hand, dass derartige Filter nach einer gewissen Einsatzzeit gereinigt werden müssen. Es ist bekannt und üblich, in der Polymerschmelze verarbeitenden Anlage zwei Filter parallel einzusetzen, wobei während einer der Filter der Reinigung unterzogen wird, der zweite Filter, der zuvor als Standby-Filter eingesetzt wurde, über Schmelzeventile anstelle des zu reinigenden Filters in den Schmelzestrom geschaltet wird.

Im Stand der Technik sind nun zwei Methoden bekannt, den Filter zu reinigen.

Die klassische Methode sieht vor, den Filter vollständig auszubauen und außerhalb der Anlage zu reinigen. Als Reinigungsverfahren sind das
- das Spülen in Lösungsmitteln wie beispielsweise Triethylenglycol (TE),
- das Reinigen in einem Ultraschall-Bad,
- die Pyrolyse, wobei die Polymerketten in niedermolekulare Bestandteile aufgebrochen werden (cracken),
- die Hydrolyse, die ebenfalls ein Cracken der Polymerketten bewirkt, oder
- die Oxidation

bekannt. Nach der Reinigung wird der Filter durch Abwiegen und Vergleich mit dem Nettogewicht sowie durch einen Bubble-point-Test geprüft und bei negativem Ergebnis entsorgt. Durch das Abwiegen können im Filter verbliebene Bestandteile festgestellt werden. Der Bubble-point-Test ist ein Alkohol-Blasenbildungstest, bei dem die Blasenbildung bei der Porenfreiblasung über dem Druck ermittelt wird. Damit kann der Zustand der Poren beurteilt werden.

Die Methode, den Filter im ausgebauten Zustand zu reinigen, hat den Nachteil, dass neben dem Vorhalten einer externen Reinigungsvorrichtung und dem Demontageaufwand verschmutztes Lösungsmittel anfällt. Dies ist aus Umweltschutzgründen zu vermeiden, zumal bei der Entsorgung hohe Kosten anfallen.

Aus der EP 0 791 386 B1 ist eine alternative Methode bekannt, bei der der Filter im eingebauten Zustand mit Heißdampf, der mittels eines externen Heizers erhitzt wird, rückgespült und so durch Hydrolyse gereinigt wird. Diese alternative Methode hat jedoch trotz ihrer offensichtlichen Vorteile den Nachteil, dass das üblicherweise nach der Reinigung durchgeführte Prüfen des Filters hier nicht möglich ist, weshalb in der Fachwelt Vorbehalte gegen diese Methode existieren.

Aus der DE 196 49 013 A ist auch bekannt, ein Polymerfilter zunächst in eingebautem Zustand unter Zuleitung von Wasserdampf vorzureinigen, es dann auszubauen und anschließend eine Endreinigung vorzunehmen. Hierzu ist eine externe Wasserdampferzeugung und die Einleitung von Dampf mit der für die Vorreinigung gewünschten Temperatur erforderlich.

Es ist daher Aufgabe der Erfindung, die klassische Reinigungsmethode zu vereinfachen und zu verbessern, ohne auf die anschließende Prüfung des Filters zu verzichten. Besonderes Augenmerk wird auf geringen Bauaufwand und niedrige Betriebskosten gelegt.

Diese Aufgabe wird erfindungsgemäß durch ein Verfahren nach dem Anspruch 1 bzw. eine Vorrichtung nach Anpruch 8 gelöst. Vorteilhafte Ausgestaltungen sind in den jeweils abhängigen Ansprüchen angegeben.

Dabei wird bei einem Polymerfilter einer zuvor beschriebenen Bauweise die Reinigung wie folgt durchgeführt: Nachdem die Schmelzezufuhr des Filtergehäuses abgesperrt wurde, wird zunächst das Polymer abgelassen. Dies kann durch einfaches Öffnen eines Verschlusses am Filterkasten erfolgen. Es ist auch denkbar, diesen Prozess durch ein Spülmedium wie Druckluft oder Stickstoff zu unterstützen. In einem zweiten Schritt erfolgt die Vorreinigung des noch eingebauten Polymerfilters, um zuerst das noch an dem Polymerfilter haftende Polymer und die groben Verschmutzungen des Polymerfilters zu entfernen. Es muss davon ausgegangen werden, dass in diesem Schritt der Polymerfilter zwar überwiegend, aber nicht vollständig gereinigt wird. Daher sieht die Erfindung in einem weiteren Schritt den Ausbau und die Endreinigung des Polymerfilters vor, wobei hierbei die verbliebenen Verschmutzungen entfernt werden. Das Vorreinigen des Polymerfilters erfolgt erfindungsgemäß im Filtergehäuse mit Dampf, wobei die Reinigungswirkung durch den Überdruck des Dampfes, der die Verschmutzungen herausspült, sowie durch Hydrolyse erfolgt. Dabei weist der Dampf eine Temperatur auf, die im Wesentlichen der Schmelzetemperatur des Polymers entspricht. Üblicherweise wird der Polymerfilter in einer beheizten Filtereinheit eingesetzt. Die Verwendung von Dampf mit Schmelzetemperatur hat den Vorteil, dass die Erhitzung des Dampfes direkt durch die Heizung der beheizten Filtereinheit erfolgen kann. Dadurch wird eine zusätzliche, externe Heizung für den Dampf eingespart.

In einer Variante der Erfindung wird bei der Vorreinigung des Polymerfilters zunächst der Filterkasten, der den Polymerfilter enthält, aus der Filtereinheit ausgebaut, wobei der Polymerfilter für die nachfolgende Vorreinigung in dem Filterkasten verbleibt.

In einer weiteren, unabhängigen Variante des erfindungsgemäßen Verfahrens erfolgt nach dem Endreinigen die Prüfung des Polymerfilters. Dies bietet sich besonders an, da der Polymerfilter auf Grund des vorhergehenden Verfahrensschrittes ohnehin ausgebaut ist.

In einer Weiterbildung der Erfindung wird der Dampf nach dem Durchströmen des Polymerfilters in einem Gaswäscher oder Abscheider gereinigt. Daraufhin kann der Dampf entweder zu Wasser kondensiert und entsorgt oder erneut erhitzt und dem Filtergehäuse wieder zugeführt werden.

In einer weiteren, bevorzugten Variante der Erfindung erfolgt die Endreinigung des Polymerfilters in demontiertem Zustand mit einem Lösungsmittel, beispielsweise Triethylenglykol.

Eine Vorrichtung zur Durchführung des erfindungsgemäßen Verfahrens besteht aus einer beheizbaren Filtereinheit, die zumindest eine Wasserzuleitung für das zu erhitzende Wasser aufweist. Dabei sind dem Fachmann unterschiedliche Lösungen bekannt, wie das Wasser innerhalb der Filtereinheit erhitzt wird. Beispielsweise bietet sich bei einer Beheizung der Filtereinheit mit einem Wärmeträgermedium an, ein Leitungsstück in Form eines Rohres durch die Filtereinheit zu führen. Der Erfindungsgedanke richtet sich allgemein darauf, dass die Filtereinheit das Wasser für die Reinigung erhitzen kann und so eine zusätzliche Heizung für den Dampf eingespart wird.

Zur Durchführung des Reinigungsvorganges weist die Filtereinheit Anschlüsse auf, durch die der Dampf den Polymerfiltern zugeleitet und wieder abgeleitet werden kann.

In einer Ausführungsvariante bestehen dazu Verbindungen für Dampf zu den Schmelzeventilen, durch die der Dampf in einer eigenen Reinigungsstellung der Schmelzeventile durch die Polymerfilter geleitet wird.

In einer bevorzugten Ausführungsvariante wird vermieden, dass der Dampf durch die Schmelzeventile geleitet wird, um eventuelle Undichtigkeiten der Ventile zu verhindern. Dazu sind die Polymerfilter in Filterkästen integriert. Diese Filterkästen sind jeweils innerhalb der Filtereinheit in zwei Stellungen montierbar. In der Betriebsstellung korrespondieren die Anschlüsse des Filterkastens mit den Schmelzeleitungen. In einer Reinigungsposition hingegen korrespondieren die Anschlüsse des Filterkastens mit einem Dampfeinlass und einer Dampfauslass, so dass in dieser Stellung die Reinigung erfolgen kann.

Die Verbindung zwischen dem in der Filtereinheit integrierten Dampferhitzer und der Dampfzuleitung kann direkt im Inneren der Filtereinheit erfolgen. In einer Ausführungsvariante der erfindungsgemäßen Vorrichtung erfolgt die Verbindung hingegen außerhalb, beispielsweise über eine flexible Leitung. Hierzu ist der Dampferhitzer auf seiner Auslassseite mit einem Dampfanschluss verbunden, durch welchen der Dampf in eine flexible Dampfzuleitung abführbar ist.

Der während der Reinigung austretende Dampf enthält Polymerbestandteile in Form von vercracktem Material, Schmelze,' Gelen oder Monomeren. Diese müssen mittels eines Abscheiders aus dem Dampf abgeschieden werden. Um nicht für jede Filtereinheit einen eigenen stationären Abscheider vorsehen zu müssen, ist der Abscheider mobil ausgeführt, um von Filtereinheit zu Filtereinheit verfahren werden zu können und jeweils mit der zu reinigenden Filtereinheit verbunden werden zu können. Das Attribut mobil beinhaltet Eigenschaften des Abscheiders, die das leichte Transportieren und Verbinden mit den jeweiligen Filtereinheiten ermöglicht. Dies sind beispielsweise Transportrollen, Handgriffe, geringes Gewicht des Abscheiders sowie flexible Leitungen und Schnellverschlüsse für die Dampfleitungen.

Der Abscheider setzt sich in einer besonders bevorzugten Ausführungsform aus zwei Kammern zusammen. Der aus der Filtereinheit austretende Dampf wird zunächst einer ersten Kammer zugeführt, in der die festen und flüssigen Polymerbestandteile aufgefangen werden. Hierzu ist ein Auffangblech vorgesehen, auf das diese Bestandteile fallen. Anschließend wird der Dampf in eine zweite Kammer geleitet. In dieser Reinigungskammer wird der Dampf durch ein Wasserbad geleitet und dort kondensiert. Im Dampf enthaltene Monomere und restliche Schmelzebestandteile werden hierbei zurückgehalten und können nicht in die Umwelt entweichen.

Ein Ausführungsbeispiel wird im Folgenden unter Hinweis auf die beigefügte Zeichnung näher beschrieben.

Es stellen dar:
- Fig. 1: eine Vorrichtung zum Durchführung des erfindungsgemäßen Verfahrens.
- Fig. 2: eine Vorrichtung zum Durchführung einer Variante des erfindungsgemäßen Verfahrens.
- Fig. 3: eine alternative Ausführungsform der Vorrichtung zum Durchführen des erfindungsgemäßen Verfahrens.

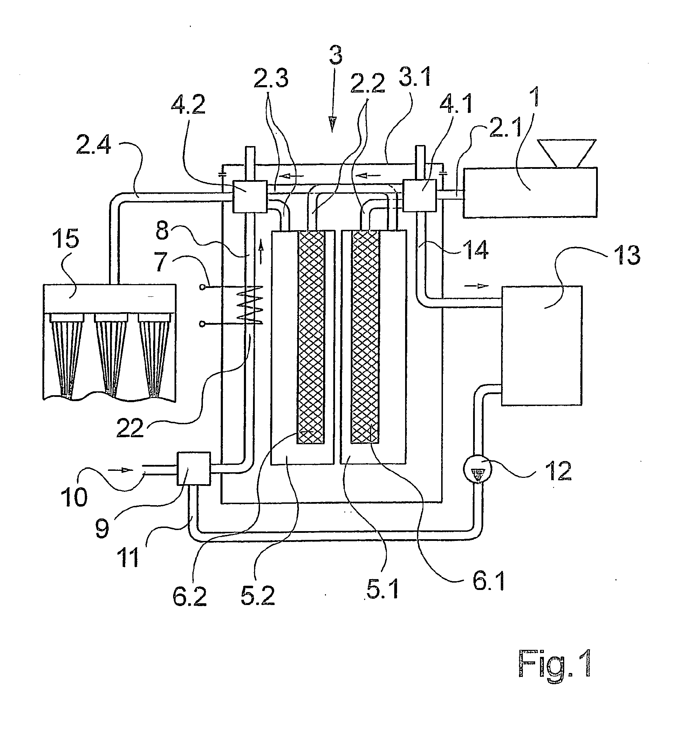

In Fig. 1 ist eine Vorrichtung zum Durchführung des erfindungsgemäßen Verfahrens dargestellt, anhand derer das Verfahren beschrieben wird. In einem Extruder 1 wird ein thermoplastisches Polymer aufgeschmolzen und über die Schmelzeleitung 2.1 der Filtereinheit 3 zugeführt. Die Filtereinheit 3 ist über eine Heizung 7 beheizbar und enthält zwei Filterkästen 5.1 und 5.2. Die Wärme wird dabei beispielsweise über ein Wärmeträgermedium von der Heizung 7 auf die Filterkästen 5.1 und 5.2 übertragen. Diese Filterkästen 5.1 und 5.2 enthalten jeweils einen Polymerfilter 6.1 und 6.2, die von der Schmelze durchströmt werden und diese filtern.

Die über die Schmelzeleitung 2.1 der Filtereinheit 3 zugefügte Schmelze wird zunächst einem ersten Schmelzeventil 4.1 zugeführt. Dieses Schmelzeventil 4.1 leitet die Schmelze über die Schmelzeleitungen 2.2 wahlweise in den ersten Filterkasten 5.1 oder in den zweiten Filterkasten 5.2. Die Auslässe der Filterkästen 5.1 und 5.2 sind über die Schmelzeleitungen 2.3 mit einem zweiten Schmelzeventil 4.2 verbunden, dass jeweils einen der Auslässe der Filterkästen 5.1 oder 5. 2 mit dem Auslass der Filtereinheit 3 und damit mit der Schmelzeleitung 2.4 verbindet. Es versteht sich, dass das erste Schmelzeventil 4.1 und das zweite Schmelzeventil 4. 2 jeweils synchron betätigt werden müssen, um einen störungsfreien Durchfluss durch die Filtereinheit 3 zu gewährleisten.

Die durch die Filtereinheit 3 gefilterte Schmelze wird dann über die Schmelzeleitung 2.4 beispielsweise einer Schmelzspinnanlage 15 zugeführt, die hier stellvertretend für andere polymerverarbeitende Anlagen steht.

Die Reinigung des Polymerfilters 6.1 oder 6.2 vollzieht sich wie folgt. Es wird vorausgesetzt, dass die Schmelze den Polymerfilter 6.1 durchströmt und im zweiten Filterkasten 5.2 ein sauberer Polymerfilter 6.2 bereit steht. Zunächst wird durch Betätigen des ersten Schmelzeventils 4.1 und des zweiten Schmelzeventils 4.2 der Schmelzstrom durch den zweiten Filterkasten 5.2 geleitet und der erste Filterkasten 5.1 vom Schmelzestrom abgekoppelt. Als Nächstes wird die Schmelze aus dem ersten Filterkasten 5.1 über eine hier nicht dargestellte Öffnung nach außen abgelassen. Die sich daran anschließende Vorreinigung wird nun durchgeführt. Dazu wird über eine Wasserzuleitung 10 und ein Ventil 9 der beheizten Filtereinheit 3 Wasser zugeführt, das in der Filtereinheit 3 durch einen Dampferhitzer 22 beheizt wird. In Figur 1 ist eine Variante dargestellt, in der die Heizung 7 der Filtereinheit 3 das Wasser direkt in einem Leitungsstück erhitzt. Es ist jedoch auch möglich, das Wasser indirekt über das der Filtereinheit 3 in der Regel enthaltene Wärmeträgermedium zu erhitzen. Eine direkte Verbindung mit dem Heizer hat jedoch den Vorteil, dass während des Dampferhitzens der Heizer 7 kurzzeitig mit einer höheren Leistung betrieben werden kann und dem Dampf die Wärme direkt zuführt. Über den Schmelzeauslass des Filterkastens 5.1 wird der Dampf aus der Dampfzuleitung 8 dem ersten Filterkasten 5.1 zugeführt, wo der Dampf den ersten Filter 6.1 entgegen der Strömungsrichtung der Schmelze durchströmt. Gemeinsam mit den ausgespülten Rückständen durchströmt der Dampf die Zuleitung des ersten Filterkasten aus 5.1 und wird über den Einlass des ersten Filterkastens 5.1 durch die Dampfaustrittsleitung 14 dem Abscheider 13 zugeführt. In dem Abscheider 13 werden die aus dem ersten Polymerfilter 6.1 beziehungsweise dem ersten Filterkasten 5.1 herausgespülten Polymerrückstände vom Dampf getrennt. Anschließend wird der so gereinigte Dampf, der auch teilweise zu Wasser kondensiert ist, über eine Pumpe 12 und eine Wasserrückleitung 11 dem Ventil 9 und darüber der Filtereinheit 3 wieder zugeführt. Es ist alternativ auch möglich, den Dampf direkt hinter dem Abscheider 13 zu entsorgen und auf den Kreislauf mit der Punkte 12 und der Wasserrückleitung 11 zu verzichten. Dann muss über die Wasserzuleitung 10 ständig frisches Wasser zugeführt werden. Die Reinigung des ersten Polymerfilters 6.1 und des ersten Filterkasten 5.1 besteht einerseits in der Rückspülung des Polymerfilters 6.1, andererseits erfolgt die Reinigung durch Hydrolyse, bei der die Polymerketten des Polymers gecrackt werden.

Nach Abschluss der Vorreinigung wird der Deckel 3.1 der Filtereinheit 3 geöffnet und der erste Polymerfilter 6.1 aus dem ersten Filterkasten 5.1 ausgebaut. Dieser vorgereinigte Polymerfilter wird entweder durch einen bereitstehenden Ersatz-Polymerfilter ersetzt oder nach der Endreinigung wieder eingebaut. Versuche haben gezeigt, dass der Polymerfilter 6.1 zu diesem Zeitpunkt frei von Schmelze oder groben Verschmutzungen ist. Es ist jedoch in der Regel eine Patina auf dem Polymerfilter 6.1 festzustellen, wodurch die Notwendigkeit der Endreinigung bestätigt wird.

Die Endreinigung erfolgt außerhalb der Filtereinheit 3 in einer externen Reinigungseinrichtung, die aus dem Stand der Technik grundsätzlich bekannt ist. Der Vorteil dieses Verfahrens ist, dass der Polymerfilter 6.1 nur noch geringfügig verschmutzt ist und auch im kalten Zustand zerlegt werden kann. Bei einer sich beispielsweise anschließenden Reinigung in Triethylenglykol wird dieses nur noch geringfügig verschmutzt wodurch es leichter wieder aufbereitet werden kann und so länger verwendet werden kann, bevor es entsorgt werden muss.

Eine sich nun eventuell anschließende Prüfung des Polymerfilters 6.1 durch Wiegen sowie durch einen Bubble-point-Test dokumentiert die erfolgreiche Regeneration des Polymerfilters 6.1, der nun wieder in die Filtereinheit 3 eingebaut werden kann.

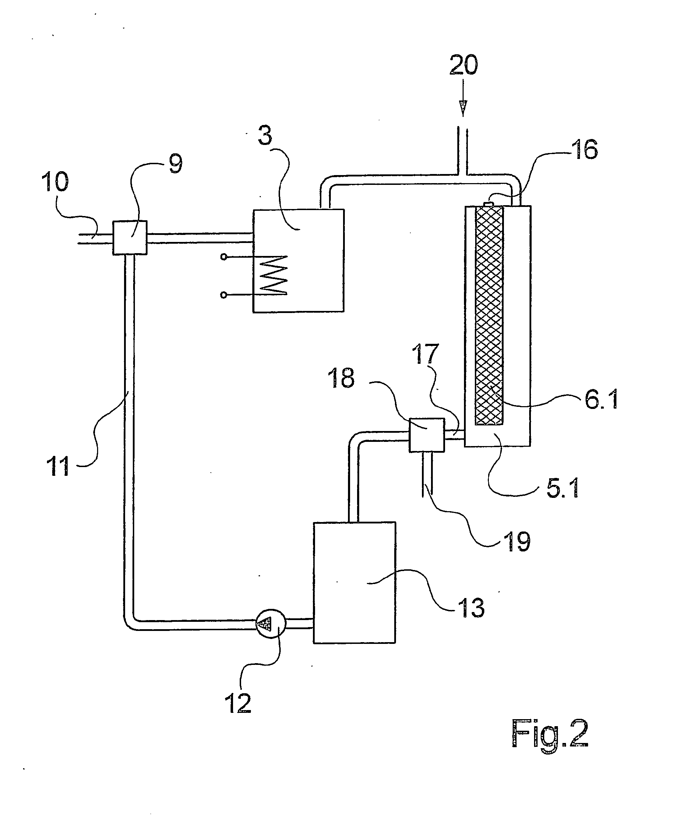

In Figur 2 ist eine Vorrichtung zur Durchführung einer Variante des erfindungsgemäßen Verfahrens gezeigt.

Hier wird nach dem Betätigen der Schmelzeventile 4.1 und 4.2 der Filterkasten 5.1 aus der Filtereinheit 3 ausgebaut. Der Schmelzezulauf, der mit der Schmelzeleitungen 2.2 verbunden war, wird mit einem Stopfen 16 verschlossen. An einer Ablauföffnung 17 wird das Ventil 18 angeschlossen, das die Ablauföffnung 17 zunächst mit dem Ablauf 19 verbindet, über den die Schmelze abläuft. Dieser Vorgang wird unterstützt durch Druckluft oder Stickstoff, der über die Druckluftanschluss 20 zugeleitet wird.

Sobald die Schmelze abgelaufen ist, wird das Ventil 18 umgeschaltet und der Filterkasten 5.1 mit dem darin enthaltenen Polymerfilter 6.1 wie in Figur 1 beschrieben mit Dampf vorgereinigt. Dabei durchströmt das Wasser beziehungsweise der Dampf die Filtereinheit 3 nur, um darin von der Heizung 7 erhitzt zu werden.

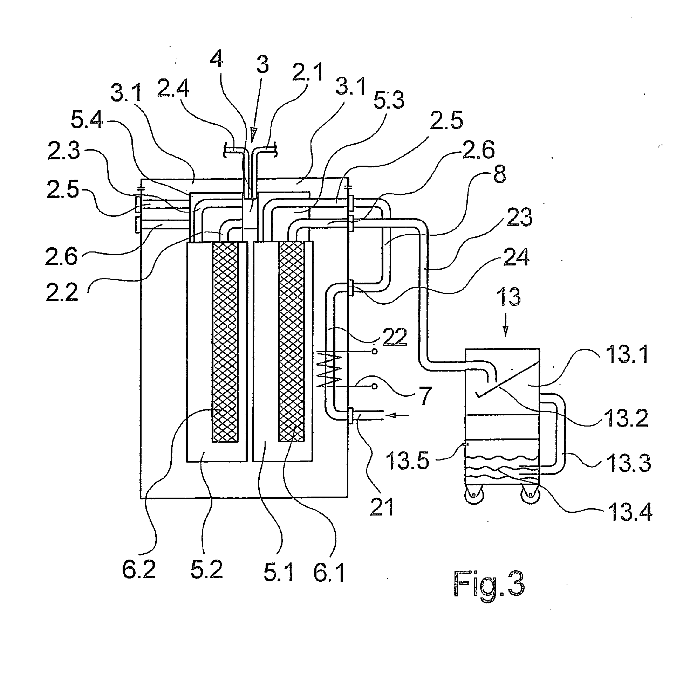

Figur 3 zeigt eine bevorzugte Ausführungsvariante. Zur vereinfachten Erläuterung baut diese Beschreibung auf der Beschreibung zu Figur 1 auf.

Im Gegensatz zu Figur 1 sind die Schmelzeventile 4.1 und 4.2 aus der Figur 1 hier zwischen den Filterkästen 5.1 und 5.2 vorgesehen und zur vereinfachten Darstellung in dem Schmelzeventilblock 4 zusammengefasst. Tatsächlich handelt es sich auf hier um zwei funktionell getrennte Schmelzeventile, die hier nur aus Platzgründen abstrahiert sind.

Die Schmelzeleitungen 2.2 und 2.3 aus Figur 1 sind in Filterkastenköpfe 5.3 und 5.4 integriert, die mit den jeweiligen Filterkästen 5.1 und 5.2 verbunden sind.

Die Filterkästen 5.1 und 5.2 sind in jeweils zwei Stellungen einbaubar. In einer Betriebsstellung, in der der Filterkasten 5.2 hier gezeigt ist, sind die Anschlüsse des Polymerfilters 6.2 über den Filterkastenkopf 5.4 mit dem Schmelzeventilblock 4 verbunden. Entsprechend der Beschreibung zu Figur 1 kann der Polymerfilter 6.2 mit den Schmelzeleitungen 2.1 und 2.4 verbunden oder abgesperrt werden.

Im Gegensatz dazu ist der Filterkasten 5.1 hier in einer Reinigungsstellung gezeigt. Über den Filterkastenkopf 5.3 ist der Polymerfilter 6.1 mit dem Dampfeinlass 2.5 bzw. dem Dampfauslass 2.6 verbunden. Diese beiden Leitungen sind für jeden der Filterkästen auf beiden Seiten der Filtereinheit vorgesehen.

Der Dampfeinlass 2.5 ist über eine Dampfzuleitung 8 mit einem Dampfanschluss 24 verbindbar. Die Dampfzuleitung 8 kann als flexible Leitung ausgeführt sein und mit Schnellanschlüssen versehen sein. Der Dampfanschluss 24 steht mit dem Dampferhitzer 22 in Verbindung. Der Dampferhitzer 22 nutzt direkt oder indirekt die im Filterkasten 3 ohnehin vorhandene Heizung 7. Im einfachsten Fall besteht der Dampferhitzer 22 aus einem einfachen Rohr. Für den Fall, dass die Filtereinheit 3 über ein Wärmeträgermedium beheizt wird, bietet es sich an, dass das Rohr zur besseren Wärmeübertragung mit einer Verrippung versehen ist. Über eine Wasserzuleitung 21 wird dem Dampferhitzer 22 das benötigte Wasser zugeführt.

Auf der Dampfaustrittsseite der Filtereinheit ist der Dampfauslass 2.6 mit einer Dampfaustrittsleitung 23 mit einem Abscheider 13 verbunden. Auch die Dampfaustrittsleitung 23 kann als flexible Leitung ausgeführt sein und mit Schnellanschlüssen versehen sein.

In dem Abscheider 13 wird der austretende Dampf zunächst in eine Auffangkammer 13.1 geleitet, in der der Dampf zuerst von festen oder flüssigen Bestandteilen des Polymers befreit wird. Diese werden von einem oder mehreren Auffangblechen 13.2 aufgefangen. Die Bleche können massiv oder als grobmaschiges Gitter ausgeführt sein.

Dann wird der so vorgereinigte Dampf über eine Verbindung 13.3 der Reinigungskammer 13.4 zugeführt, In dieser Reinigungskammer wird der Dampf durch ein Wasserbad geleitet und dort kondensiert. Die in dem Reinigungsprozess entstandenen und noch in dem Dampf enthaltenen Monomere werden in diesem Wasserbad aufgefangen. Eine Öffnung 13.5 in der Reinigungskammer 13.4 sorgt für den Druckausgleich.

Zur Durchführung der Reinigung des Polymerfilters 6.1 wird wie folgt vorgegangen. Zunächst befindet sich der Filterkasten in der Betriebsstellung, wie sie für den Filterkasten 5.2 gezeigt ist. Durch das Schließen der Schmelzeventile im Schmelzeventilblock 4 wird der Polymerfilter von den Schmelzeleitungen 2.1 und 2.4 getrennt. Die Schmelze wird abgelassen und gegebenenfalls ausgeblasen. Anschleißend wird der Filterkasten 5.1 ausgebaut und in der in Figur 3 gezeigten Reinigungsstellung wieder eingebaut. Der mobile Abscheider 13 wird herangefahren und die Wasserzuleitung 21, die Dampfzuleitung 8 und die Dampfaustrittsleitung 23 werden als flexible Leitungen wie gezeigt angeschlossen. Dann wird über die Wasserzuleitung 21 Wasser dem System zugeführt. Entsprechend den Sicherheitsvorschriften sind hier nicht gezeigte Überdruckventile vorgesehen. Der entstehende Dampf reinigt den Polymerfilter 6.1 und wird in dem Abscheider 13 von Polymerrückständen befreit. Anschließend wird der Filter wieder ausgebaut und in einer nachfolgenden, hier nicht dargestellten Reinigungsstufe mit Lösungsmittel endgereinigt und das Reinigungsergebnis überprüft.

### Bezugszeichenliste

- 1: Extruder
- 2.1: Schmelzeleitung
- 2.2: Schmelzeleitung
- 2.3: Schmelzeleitung
- 2.4: Schmelzeleitung
- 2.5: Dampfeinlass
- 2.6: Dampfauslass
- 3: Filtereinheit
- 3.1: Deckel
- 4: Schmelzeventilblock
- 4.1: erstes Schmelzeventil
- 4.2: zweites Schmelzeventil
- 5.1: erster Filterkasten
- 5.2: zweiter Filterkasten
- 5.3: erster Filterkastenkopf
- 5.4: zweiter Filterkastenkopf
- 6.1: erster Polymerfilter
- 6.2: zweiter Polymerfilter
- 7: Heizung
- 8: Dampfzuleitung
- 9: Ventil
- 10: Wasserzuleitung
- 11: Wasserrückleitung
- 12: Pumpe
- 13: Abscheider
- 13.1: Auffangkammer
- 13.2: Auffangblech
- 13.3: Verbindung
- 13.4: Reinigungskammer
- 13.5: Öffnung
- 14: Dampfaustrittsleitung
- 15: Schmelzspinnanlage
- 16: Stopfen
- 17: Ablauföffnung
- 18: Ventil
- 19: Ablauf
- 20: Druckluftanschluss
- 21: Wasserzuleitung
- 22: Dampferhitzer
- 23: Dampfaustrittsleitung
- 24: Dampfanschluss

## Patentansprüche

1. Verfahren zum Regenerieren eines in einer Polymerschmelze verarbeitenden Anlage eingesetzten Polymerfilters (6.1, 6.2), wobei der Polymerfilter (6.1, 6.2) von einem Schmelzestrom durchströmt und im normalen Betrieb von einer Heizung (7) beheizt wird, umfassend die Schritte
- Trennen des Polymerfilters (6.1, 6.2) von den Schmelzestrom,
- Ablassen des Polymers aus dem Polymerfilter (6.1, 6.2),
- Vorreinigen des Polymerfilters (6.1, 6.2) im eingebauten Zustand, wobei das Vorreinigen mittels eines Dampfstromes erfolgt und dazu Wasser zugeführt und von der Heizung (7) so beheizt wird, dass der erzeugte Dampf eine Temperatur aufweist, die im Wesentlichen der Schmelztemperatur des Polymers entspricht,
- Ausbauen des Polymerfilters (6.1, 6.2),
- Endreinigen des Polymerfilters (6.1, 6.2) im ausgebauten Zustand.

2. Verfahren nach Anspruch 1, **dadurch gekennzeichnet, dass** der Polymerfilter (6.1, 6.2) mittels eines Filterkastens (5.1, 5.2) innerhalb einer Filtereinheit (3) montiert ist und dass nach dem Trennen des Polymerfilters (6.1, 6.2) von dem Schmelzestrom ein zusätzlicher Schritt
- Ausbauen des Filterkastens (5.1, 5.2)
zwischengeschaltet wird.

3. Verfahren nach Anspruch 2, **dadurch gekennzeichnet, dass** nach dem Ausbauen des Filterkastens (5.1, 5.2) dieser in einer Reinigungsposition wieder in den Filterkasten (3) zur Durchführung der Reinigung eingebaut wird.

4. Verfahren nach einem der Ansprüche 1 bis 3, **dadurch gekennzeichnet, dass** dem Verfahren der Schritt
- Prüfen des Reinigungszustandes des Polymerfilters (6.1, 6.2)
angeschlossen ist.

5. Verfahren nach einem der Ansprüche 1 bis 4, **dadurch gekennzeichnet, dass** der Dampf nach dem Durchströmen des Polymerfilters (6.1, 6.2) in einem Gaswäscher oder Abscheider (13) gereinigt wird.

6. Verfahren nach Anspruch 5, **dadurch gekennzeichnet, dass** der Dampf nach der Reinigung erneut dem Polymerfilter (6.1, 6.2) zugeführt wird.

7. Verfahren nach einem der Ansprüche 1 bis 6, **dadurch gekennzeichnet, dass** das Endreinigen des Polymerfilters mit einem Lösungsmittel erfolgt.

8. Vorrichtung zum Durchführen des Verfahrens nach einem der Ansprüche 1 bis 7, mit einer beheizbaren Filtereinheit (3), in der ein oder mehrere auswechselbare Polymerfilter (6.1, 6.2) enthalten sind und mit einer Heizung (7) zum Beheizen der Filtereinheit (3), **dadurch gekennzeichnet, dass** die Filtereinheit (3) eine Wasserzuleitung (10, 21) aufweist, über die Wasser zuführbar ist, das von der beheizbaren Filtereinheit (3) zu Dampf erhitzt werden kann ist.

9. Vorrichtung nach Anspruch 8, **dadurch gekennzeichnet, dass** die Wasserzuleitung (10, 21) mit einem direkt oder indirekt von der Heizung (7) beheizbaren Dampferhitzer (22) verbunden ist, in dem das Wasser zu Dampf erhitzbar ist.

10. Vorrichtung nach Anspruch 9, **dadurch gekennzeichnet, dass** der Dampferhitzer (22) auf einer Auslassseite mit einer Dampfzuleitung (8) oder einem Dampfanschluss (24) verbunden ist.

11. Vorrichtung nach Anspruch 10, **dadurch gekennzeichnet, dass** die Dampfzuleitung (8) ortsfest innerhalb der Filtereinheit (3) ausgebildet ist und über ein Schmelzeventil (4.2) mit den Polymerfiltern (6.1, 6.2) verbindbar ist.

12. Vorrichtung nach Anspruch 10, **dadurch gekennzeichnet, dass** eine Dampfzuleitung (8) flexibel außerhalb der Filtereinheit (3) ausgebildet ist und mit einem Ende mit dem Dampfanschluss (24) und mit dem anderen Ende jeweils über einen Dampfeinlass(2.5) mit den Polymerfiltern (6.1, 6.2) verbindbar ist.

13. Vorrichtung nach einem der Ansprüche 8 bis 12, **dadurch gekennzeichnet, dass** die Filtereinheit (3) eine Dampfaustrittsleitung (14,23) aufweist, über welche der Dampf aus dem Polymerfilter (6.1, 6.2) abführbar ist.

14. Vorrichtung nach Anspruch 13, **dadurch gekennzeichnet, dass** die Dampfaustrittsleitung (14) ortsfest innerhalb der Filtereinheit (3) über ein Schmelzeventile (4.1) mit den Polymerfiltern (6.1, 6.2) verbunden ist.

15. Vorrichtung nach Anspruch 13, **dadurch gekennzeichnet, dass** die Dampfaustrittsleitung (23) flexibel außerhalb der Filtereinheit (3) jeweils über ein Dampfauslass (2.6) mit den Polymerfiltern (6.1, 6.2) verbunden ist.

16. Vorrichtung nach Anspruch 12 oder 15, **dadurch gekennzeichnet, dass** die Polymerfilter (6.1, 6.2) mittels eines Filterkastens (5.1, 5.2) innerhalb der Filtereinheit (3) montierbar sind, und dass die Filterkästen (5.1, 5.2) jeweils in einer Betriebsstellung, in der die die Polymerfilter (6.1, 6.2) mit Schmelzeleitungen (2.1, 2.4) verbunden sind, und in einer Reinigungsstellung, in der die Polymerfilter (6.1, 6.2) mit dem Dampfeinlass (2.5) und dem Dampfauslass (2.6) verbunden sind, montierbar sind.

17. Vorrichtung nach einem der Ansprüche 8 bis 16, **dadurch gekennzeichnet, dass** außerhalb der Filtereinheit (3) ein Abscheider (13) vorgesehen ist, dass die Dampfaustrittsleitung (14, 23) mit dem Abscheider (13) zum Abscheiden von Polymerrückständen aus dem Dampf verbindbar und wieder trennbar ist, und dass der Abscheider (13) mobil ist.

18. Vorrichtung nach Anspruch 17, **dadurch gekennzeichnet, dass** der Abscheider (13) eine Auffangkammer (13.1) aufweist, in der in einer ersten Reinigungsstufe feste oder flüssige Polymerrückstände in einem Auffangblech (13.2) aufgefangen werden, und dass der Abscheider (13) eine Reinigungskammer (13.4) mit einem Wasserbad aufweist, durch das der Dampf geleitet wird, wobei in dieser zweiten Reinigungsstufe flüssige oder gasförmige Polymerrückstände ausgewaschen werden.

## Claims

1. Method for regenerating a polymer filter (6.1, 6.2) used in a plant processing polymer melt, a melt stream flowing through the polymer filter (6.1, 6.2) and the latter being heated during normal operation by a heating (7), comprising the steps
- separating the polymer filter (6.1, 6.2) from the melt stream,
- draining the polymer from the polymer filter (6.1, 6.2),
- precleaning the polymer filter (6.1, 6.2) in the installed state, precleaning taking place by means of a steam stream and, for this purpose, water being supplied and being heated by the heating (7) such that the generated steam has a temperature which corresponds essentially to the melt temperature of the polymer,
- demounting the polymer filter (6.1, 6.2),
- final cleaning of the polymer filter (6.1, 6.2) in the demounted state.

2. Method according to Claim 1, **characterized in that** the polymer filter (6.1, 6.2) is mounted inside a filter unit (3) by means of a filter box (5.1, 5.2), and **in that**, after the separation of the polymer filter (6.1, 6.2) from the melt stream, an additional step
- demounting of the filter box (5.1, 5.2)
is interposed.

3. Method according to Claim 2, **characterized in that,** after the demounting of the filter box (5.1, 5.2), the latter is installed again, in a cleaning position, in the filter box (3) for carrying out cleaning.

4. Method according to one of Claims 1 to 3, **characterized in that** the method is followed by the step
- checking the cleaning state of the polymer filter (6.1, 6.2).

5. Method according to one of Claims 1 to 4, **characterized in that** the steam, after flowing through the polymer filter (6.1, 6.2), is purified in a gas scrubber or separator (13).

6. Method according to Claim 5, **characterized in that,** after purification, the steam is supplied once again to the polymer filter (6.1, 6.2).

7. Method according to one of Claims 1 to 6, **characterized in that** the final cleaning of the polymer filter takes place by means of a solvent.

8. Device for carrying out the method according to one of Claims 1 to 7, with a heatable filter unit (3) which contains one or more exchangeable polymer filters (6.1, 6.2), and with a heating (7) for heating the filter unit (3), **characterized in that** the filter unit (3) has a water supply line (10, 21), via which water can be supplied which can be heated by the heatable filter unit (3) to form steam.

9. Device according to Claim 8, **characterized in that** the water supply line (10, 21) is connected to a steam heater (22) which is heatable directly or indirectly by the heating (7) and in which the water can be heated to form steam.

10. Device according to Claim 9, **characterized in that** the steam heater (22) is connected on an outlet side to a steam supply line (8) or to a steam connection (24).

11. Device according to Claim 10, **characterized in that** the steam supply line (8) is formed at a fixed location inside the filter unit (3) and is connectable to the polymer filters (6.1, 6.2) via a melt valve (4.2).

12. Device according to Claim 10, **characterized in that** a steam supply line (8) is formed flexibly outside the filter unit (3) and is connectable at one end to the steam connection (24) and at the other end, in each case via a steam inlet (2.5), to the polymer filters (6.1, 6.2).

13. Device according to one of Claims 8 to 12, **characterized in that** the filter unit (3) has a steam outlet line (14, 23), via which the steam can be discharged from the polymer filter (6.1, 6.2).

14. Device according to Claim 13, **characterized in that** the steam outlet line (14) is connected at a fixed location inside the filter unit (3) to the polymer filters (6.1, 6.2) via a melt valve (4.1).

15. Device according to Claim 13, **characterized in that** the steam outlet line (23) is connected flexibly outside the filter unit (3) to the polymer filters (6.1, 6.2) in each case via a steam outlet (2.6).

16. Device according to Claim 12 or 15, **characterized in that** the polymer filters (6.1, 6.2) can be mounted inside the filter unit (3) by means of a filter box (5.1, 5.2), and **in that** the filter boxes (5.1, 5.2) can be mounted in each case in an operating position, in which the polymer filters (6.1, 6.2) are connected to melt lines (2.1, 2.4), and in a cleaning position, in which the polymer filters (6.1, 6.2) are connected to the steam inlet (2.5) and to the steam outlet (2.6).

17. Device according to one of Claims 8 to 16, **characterized in that** a separator (13) is provided outside the filter unit (3), **in that** the steam outlet line (14, 23) can be connected to the separator (13) for the separation of polymer residues from the steam and can be separated again, and **in that** the separator (13) is movable.

18. Device according to Claim 17, **characterized in that** the separator (13) has a collecting chamber (13.1) in which, in a first cleaning step, solid or liquid polymer residues are collected in a collecting plate (13.2), and **in that** the separator (13) has a cleaning chamber (13.4) with a water bath through which the steam is conducted, in this second cleaning step liquid or gaseous polymer residues being washed out.

## Revendications

1. Procédé destiné à la régénération d'un filtre à polymères (6.1, 6.2), utilisé dans une installation traitant de la coulée de polymères, le filtre à polymères (6.1, 6.2) étant parcouru par un flux de coulée et à l'état normal étant chauffé par un chauffage (7), comprenant les étapes
- séparation du filtre à polymères (6.1, 6.2) du flux de coulée,
- évacuation du polymère hors du filtre à polymères (6.1, 6.2),
- nettoyage préalable du filtre à polymères (6.1, 6.2) en état monté, le nettoyage préalable étant effectué au moyen d'un flux de vapeur et de l'eau étant alimentée pour ce faire et étant chauffée par le chauffage (7) de manière telle que la vapeur générée a une température qui correspond sensiblement à la température de fusion du polymère,
- démontage du filtre à polymères (6.1, 6.2)
- nettoyage final du filtre à polymères (6.1, 6.2) en état démonté.

2. Procédé selon la revendication 1, **caractérisé en ce que** le filtre à polymères (6.1, 6.2) est monté au moyen d'une boite de filtre (5.1, 5.2) à l'intérieur d'une unité de filtre (3) et **en ce qu'**après la séparation du filtre à polymères (6.1, 6.2) du flux de coulée une étape supplémentaire,
- démontage de la boite de filtre (5.1, 5.2) -
est intercalée.

3. Procédé selon la revendication 2, **caractérisé en ce qu'**après le démontage de la boite de filtre (5.1, 5.2) celui-ci est à nouveau monté dans la boite de filtre (3) en une position de nettoyage pour effectuer le nettoyage.

4. Procédé selon l'une des revendications 1 à 3, **caractérisé en ce que** le procédé est suivi par l'étape
- examen de l'état de nettoyage du filtre à polymères (6.1, 6.2).

5. Procédé selon l'une des revendications 1 à 4, **caractérisé en ce que** la vapeur, après avoir parcouru le filtre à polymères (6.1, 6.2), est nettoyée dans un épurateur de gaz ou dans un séparateur (13).

6. Procédé selon la revendication 5, **caractérisé en ce qu'**après le nettoyage la vapeur est à nouveau alimentée dans le filtre à polymères (6.1, 6.2).

7. Procédé selon l'une des revendications 1 à 6, **caractérisé en ce que** le nettoyage final du filtre à polymères est effectué avec un solvant.

8. Dispositif pour la mise en oeuvre du procédé selon l'une des revendications 1 à 7, avec une unité de filtre (3) pouvant être chauffée, dans laquelle un filtre ou une pluralité de filtres à polymères (6.1, 6.2) pouvant être échangés, sont compris, et avec un chauffage (7) pour chauffer l'unité de filtre (3), **caractérisé en ce que** l'unité de filtre (3) dispose d'une conduite d'alimentation en eau (10, 21) par laquelle on peut amener de l'eau, qui peut être chauffée par l'unité de filtre (3) pouvant être chauffée, pour former de la vapeur.

9. Dispositif selon la revendication 8, **caractérisé en ce que** la conduite d'alimentation en eau (10, 21) est reliée à un chauffage de vapeur (22) qui peut être chauffé directement ou indirectement par le chauffage (7), chauffage de vapeur dans lequel l'eau peut être chauffée pour former de la vapeur.

10. Dispositif selon la revendication 9, **caractérisé en ce que** sur un coté sortie le chauffage de vapeur (22) est relié à une conduite d'alimentation en vapeur (8) ou à un raccord de vapeur (24).

11. Dispositif selon la revendication 10, **caractérisé en ce que** la conduite d'alimentation en vapeur (8) est réalisée de manière stationnaire à l'intérieur de l'unité de filtre (3) et peut être reliée aux filtres à polymères (6.1, 6.2) à l'intermédiaire d'une vanne à coulée (4.2).

12. Dispositif selon la revendication 10, **caractérisé en ce qu'**une conduite d'alimentation en vapeur (8) est réalisée de façon flexible à l'extérieur de l'unité de filtre (3) et peut être reliée avec une extrémité au raccord de vapeur (24) et avec l'autre extrémité respectivement à l'intermédiaire d'une entrée de vapeur (2.5), avec les filtres à polymères (6.1, 6.2).

13. Dispositif selon l'une des revendications 8 à 12, **caractérisé en ce que** l'unité de filtre (3) a une conduite de sortie de vapeur (14, 23) par laquelle la vapeur peut être évacuée du filtre à polymères (6.1., 6.2).

14. Dispositif selon la revendication 13, **caractérisé en ce que** la conduite de sortie de vapeur (14) est reliée aux filtres à polymères (6.1, 6.2) de façon stationnaire à l'intérieur de l'unité de filtre (3) à l'intermédiaire d'une vanne à coulée (4.1).

15. Dispositif selon la revendication 13, **caractérisé en ce que** la conduite de sortie de vapeur (23) est reliée de façon flexible à l'extérieur de l'unité de filtres (3) respectivement par une sortie de vapeur (2.6) avec les filtres à polymères (6.1, 6.2).

16. Dispositif selon la revendication 12 ou 15, **caractérisé en ce que** les filtres à polymères (6.1, 6.2) peuvent être montés au moyen d'une boite de filtre (5.1, 5.2) à l'intérieur de l'unité de filtre (3) et **en ce que** les boites de filtres (5.1, 5.2) sont respectivement dans un état d'opération, dans lequel les filtres à polymères (6.1, 6.2) sont reliés à des conduites de coulée (2.1, 2.4) et peuvent être montés dans un état de nettoyage, dans lequel les filtres à polymères (6.1, 6.2) sont reliés à l'entrée de vapeur (2,5) et à la sortie de vapeur (2.6).

17. Dispositif selon l'une des revendications 8 à 16, **caractérisé en ce qu'**un séparateur (13) est prévu à l'extérieur de l'unité de filtre (3), **en ce que** la conduite de sortie de vapeur (14, 23) peut être reliée avec le séparateur pour séparer les résidus des polymères de la vapeur, et peut être séparée à nouveau et **en ce que** le séparateur (13) est mobile.

18. Dispositif selon la revendication 17, **caractérisé en ce que** le séparateur (13) a une chambre de recueil (13.1), dans laquelle dans une première étape de nettoyage des résidus de polymères solides ou liquides sont recueillis dans une tôle réceptrice (13.2) et **en ce que** le séparateur (13) a une chambre de nettoyage (13.4) avec un bain à eau, à travers lequel on guide la vapeur, dans cette deuxième étape de nettoyage des résidus liquides ou en forme de gaz étant lavés.
